(19) **Europäisches Patentamt / European Patent Office / Office européen des brevets**

(11) **EP 1 845 479 B1**

(12) **FASCICULE DE BREVET EUROPEEN**

(45) Date de publication et mention
de la délivrance du brevet:
**15.12.2010 Bulletin 2010/50**

(51) Int Cl.:
***G06K 9/62*** *(2006.01)* ***G06K 9/68*** *(2006.01)*
***G01N 33/00*** *(2006.01)*

(21) Numéro de dépôt: **06290598.9**

(22) Date de dépôt: **12.04.2006**

(54) **L'analyse comparative d'un échantillon par rapport à une base de données**

Vergleichende Analyse eines Musters im Lichte einer Datenbasis

Comparative analysis of a sample against a data base

(84) Etats contractants désignés:
**DE FR GB**

(43) Date de publication de la demande:
**17.10.2007 Bulletin 2007/42**

(73) Titulaire: **ALPHA M.O.S.**
**31400 Toulouse (FR)**

(72) Inventeurs:
• **Labreche, Saïd**
**31660 Buzet sur Tarn (FR)**
• **Amine, Hicham**
**82170 Dieupentale (FR)**
• **Loubet, François**
**31290 Gardouch (FR)**
• **Chanie, Eric**
**31450 Deyme (FR)**
• **Mifsud, Jean-Christophe**
**31500 Toulouse (FR)**

(74) Mandataire: **Joly, Jean-Jacques et al**
**Cabinet Beau de Loménie**
**158, rue de l'Université**
**75340 Paris cedex 07 (FR)**

(56) Documents cités:
**EP-A- 1 336 844     EP-A- 1 566 633**

• **MONEV V: "Introduction to Similarity Searching in Chemistry" MATCH - COMM. IN MATHEMATICAL AND COMPUTER CHEMISTRY, vol. 51, 2004, pages 7-38, XP002391656**
• **MAYFIELD H T: "Application of Chemometrics to the Classification of Orange Essence Oil Varieties by GLC" J. OF HIGH RESOLUTION CHROMATOGRAPHY & CHROMATOGRAPHY COMMUNICATIONS, vol. 9, no. 2, février 1986 (1986-02), pages 78-83, XP002391657**
• **GARDNER J W ET AL: "APPLICATION OF AN ELECTRONIC NOSE TO THE DISCRIMINATION OF COFFEES" SENSORS AND ACTUATORS B, ELSEVIER SEQUOIA S.A., LAUSANNE, CH, vol. 6, 1992, pages 71-75, XP000885337 ISSN: 0925-4005**

**Description**

La présente invention concerne les techniques analytiques utilisées pour l'analyse comparative d'échantillons, notamment pour la comparaison d'un échantillon par rapport à une base de données, dans le domaine du contrôle qualité et autres.

On souhaite souvent vérifier que la qualité d'un produit, en termes d'odeur, de saveur, de composition ou autre, atteigne un niveau prédéterminé, ou bien on souhaite prédire la valeur d'une propriété particulière d'un produit, par exemple la concentration d'une substance particulière dans le produit. Ceci est d'autant plus important dans le cas d'un produit consommable. Plusieurs techniques analytiques instrumentales ou sensorielles ont été proposées pour réaliser des mesures sur des échantillons de produits et pour comparer ces mesures avec d'autres réalisées sur des échantillons de référence (dont la qualité, ou la concentration des composantes, etc., est connue au préalable).

Typiquement, ce genre de procédé comporte une étape dite d'apprentissage lors de laquelle des mesures sont faites sur les échantillons de référence afin d'établir un modèle de traitement de données permettant de mettre en valeur les variables (mesures) liées aux propriétés intéressantes du produit. Les modèles de traitement de données classiques élaborées au cours de cette phase d'apprentissage comportent les méthodes mathématiques, les méthodes statistiques, les réseaux de neurones (dont les poids évoluent au cours de la phase d'apprentissage), les règles de décision (ces règles étant déterminées lors de la phase d'apprentissage), ou autres.

Ces modèles de traitement de données sont souvent utilisés pour déterminer à quelle classe appartient un échantillon dit "inconnu" qui est présenté au système après la phase d'apprentissage. De ce fait, on appelle souvent ce genre de modèle "un modèle d'identification" ou bien "un modèle de reconnaissance". En général l'analyse cherche à classer l'échantillon "inconnu" dans l'une des classes définies à partir de la base d'apprentissage, que ce soient des classes associées aux différentes origines - par exemple, des classes "café colombien", "café de Jamaïque", "café Ethiopien", etc. lorsqu'on cherche à déterminer de quel genre de café il s'agit - ou que ce soient des classes représentant des qualités différentes - par exemple, des classes "défectueux", "frontalier", "de bonne qualité", etc..

L'homme du métier saura que l'expression "un échantillon inconnu" ou "sous test" comprend aussi bien un échantillon dont la nature est inconnue qu'un échantillon dont la nature est connue (par exemple, "c'est un échantillon de café") mais dont on ne sait pas la qualité ou la teneur en une composante particulière.

En général, les modèles d'identification ou de reconnaissance élaborés au cours de la phase d'apprentissage sont mis à jour en y ajoutant des données provenant d'échantillons inconnus appropriés qui ont été présentés au système. Cette mise à jour peut être décidée par l'utilisateur mais elle peut être aussi automatisée. Ce dernier cas est géré par une règle de décision de type "si le degré de ressemblance de l'échantillon inconnu avec les échantillons d'apprentissage est supérieur à un seuil choisi alors cet échantillon devient un échantillon d'apprentissage". Il est à noter qu'à chaque mise à jour tout modèle construit sur les échantillons d'apprentissage est remis à jour.

Souvent, ces techniques d'analyse visent à repérer des défauts affectant un produit, par exemple un produit issu d'une chaîne de fabrication. Il est, donc, important que les techniques d'analyse employées puissent différencier entre des variations naturelles d'un produit et des véritables défauts.

Les mesures réalisées par un instrument sur un échantillon sont autant de variables dont les valeurs décrivent cet échantillon. Plusieurs des instruments employés pour la prise de mesures sur les échantillons génèrent un nombre constant de variables. Par exemple, un appareil du genre "nez électronique" comporte un certain nombre de capteurs et les signaux de sortie des capteurs constituent les variables mesurées pour chaque échantillon. Comme le nombre de capteurs reste fixe, cet instrument de mesure génère le même nombre de variables pour les échantillons inconnus et pour les échantillons de référence utilisés lors de la phase d'apprentissage.

Or, il existe plusieurs instruments d'analyse (ou bien techniques sensorielles) selon lesquels le nombre de variables évaluées pour un échantillon n'est pas fixe. Par exemple, la technique d'analyse par chromatographie gazeuse implique le passage d'un échantillon gazeux à travers une colonne et la détection des différentes composantes qui sortent de la colonne après des temps de rétention respectifs différents. En fait, les résultats de l'analyse correspondent à un certain nombre de pics de hauteurs différents correspondant chacun à un temps de rétention différent. Le nombre de pics (temps de rétention) est différent selon la composition chimique de l'échantillon.

On a déjà abordé le problème des échantillons qui sont caractérisées par un nombre de variables non fixe dans le contexte de la recherche, dans une base de données, d'échantillons qui sont identiques ou semblables à un échantillon identifié par l'utilisateur - voir l'article « Introduction to Similarity Searching in Chemistry » par Valentin Monev (Match - Comm. in Mathematical and Computer Chemistry, Vol.51, 2004, pages 7-38). Selon cet article, on peut déterminer si un échantillon particulier de la base de données est semblable ou non à l'échantillon objet de la recherche en comparant des paramètres caractérisant les deux échantillons. Une mesure de similitude entre deux échantillons A et B peut être calculée selon plusieurs modes de calcul différents. Ces modes de calcul peuvent comporter une étape de détermination desquelles des caractéristiques sont propres à l'échantillon A, lesquelles sont communes aux échantillons A et B, et lesquelles sont propres à l'échantillon B. Toutefois, cet article n'aborde point le problème d'analyse comparative d'un échantillon sujet avec un ensemble d'échantillons de référence d'une base de données (base d'apprentissage).

Dans le cas où un nombre de variables non fixe peut décrire chaque échantillon, la manière de comparer un échantillon inconnu avec une base de données d'apprentissage n'est pas évidente. Plus particulièrement, l'élaboration et l'adaptation d'un modèle d'identification n'est pas simple dans le cas où les variables décrivant les échantillons inconnus ne sont pas nécessairement les mêmes que les variables décrivant les échantillons de référence.

Par le passé on a proposé de contourner ce problème en limitant aux variables communes la comparaison effectuée entre l'échantillon inconnu et les échantillons de référence. Pourtant, si le modèle de traitement de données ne traite que les variables communes à l'échantillon inconnu et la base d'apprentissage, l'utilisateur aura une appréciation moins précise de la similitude ou de la différence entre l'échantillon inconnu et la base d'apprentissage. Plus spécialement, il existe un risque réel que des échantillons possédant des défauts ne soient pas repérés ou bien qu'il y ait une confusion entre des variations naturelles d'un produit, qui devraient être incorporées dans le modèle de reconnaissance, et des véritables défauts.

Les systèmes d'analyse du genre décrit ci-dessus comportent souvent une interface graphique servant à afficher à l'utilisateur un certain nombre de données et de résultats. Les résultats montrés à l'utilisateur permettent à celui-ci d'obtenir un aperçu rapide des différences et des similitudes entre l'échantillon sous test et la base d'apprentissage. Les représentations graphiques classiques comprennent des représentations qui permettent de comparer les mesures obtenues pour l'échantillon inconnu avec celles obtenues pour les échantillons de la base d'apprentissage.

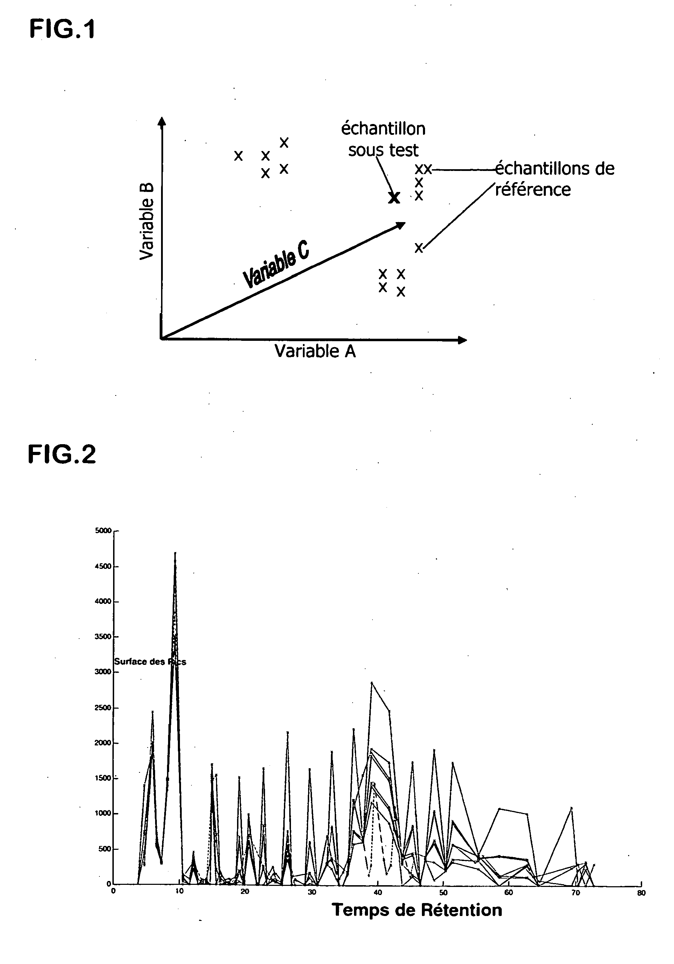

Par exemple, selon une représentation graphique classique, on définit un espace dont les axes sont définis selon les différentes mesures prises sur les échantillons et on affiche dans cet espace des points ou bien des vecteurs respectifs correspondant à l'échantillon inconnu et aux échantillons de la base d'apprentissage - voir l'exemple représenté à la Figure 1. On peut également, ou en alternative, afficher dans cet espace des régions qui constituent des classes identifiées à partir des échantillons de référence. Dans le cas général, les axes sont associés à des combinaisons particulières des variables car dans le cas ou le nombre de variables est supérieur à 3, et que l'on souhaite les représenter toutes, ces représentations sont impossibles. Ces représentations font partie, en général, des résultats de méthode statistiques d'exploration des données (exemple : Analyse en Composantes Principales).

Ce genre de représentation graphique n'est pas bien adapté au cas où les propriétés de l'échantillon inconnu ont été mesurées selon des variables qui ne sont pas identiques aux variables évaluées pour la base d'apprentissage. Dans la mesure où l'échantillon inconnu et la base d'apprentissage possèdent des caractéristiques communes, on peut représenter les mesures prises sur l'échantillon inconnu dans l'espace défini.

Si l'échantillon inconnu est décrit selon certaines des variables qui décrivent aussi la base d'apprentissage alors on peut comparer l'échantillon inconnu par rapport à la base de données dans un espace euclidien défini selon des axes correspondant à ces variables communes (ou correspondant à un sous-ensemble de ces variables). Or, selon cette représentation on va apprécier les différences et les similitudes entre l'échantillon sous test et la base d'apprentissage sur la base de renseignements partiels. En effet, des informations inhérentes aux données mesurées relatives à l'échantillon sous test et aux échantillons de référence sont ignorées.

Selon une autre représentation graphique classique, on superpose les valeurs mesurées pour l'ensemble des échantillons (celles relatives à l'échantillon inconnu et celles relatives aux échantillons de la base d'apprentissage). La Figure 2 montre un exemple d'une représentation graphique de ce type relatif à une analyse par chromatographie en phase gazeuse - cette analyse comportait une phase d'apprentissage lors de laquelle 7 échantillons ont été analysés, ce qui donnait 60 variables différentes (temps de rétention). Les pics obtenus pour ces échantillons d'apprentissage sont indiqués sur la Figure 2. Un échantillon inconnu était ensuite présenté à la colonne de chromatographie et on a mesuré 51 temps de rétention (variables). Les pics obtenus pour l'échantillon inconnu sont aussi indiqués sur la Figure 2.

En regardant la Figure 2 il est évident que cette représentation graphique classique inclut toutes les informations disponibles à propos de l'échantillon inconnu et des échantillons référence. Or, la quantité d'information présentée et l'imbrication des différents tracés ne permettent pas de mettre en évidence d'une manière simple les différences et les similitudes entre l'échantillon sous test et la base de données.

La présente invention a été conçue au vu des inconvénients mentionnés ci-dessus.

La présente invention concerne un procédé de contrôle qualité tel qu'énoncé dans les revendications annexées adapté à déterminer si la qualité d'un produit atteigne ou non un niveau prédéterminé par analyse comparative d'un échantillon sujet, provenant dudit produit, par rapport à un ensemble d'échantillons de référence provenant également de produits, la qualité des produits correspondant aux échantillons de référence étant du niveau prédéterminé.

La présente invention concerne en outre un système de contrôle qualité tel qu'énoncé dans les revendications annexées.

Par ailleurs, la présente invention concerne une méthode de production d'une représentation graphique, ou de plusieurs représentations graphiques, telle que décrit ci-dessous.

La présente invention concerne en outre un système de production d'une représentation graphique, ou de plusieurs représentations graphiques, tel que décrit ci-dessous.

Par ailleurs, la présente invention concerne une interface graphique telle que décrite ci-dessous.

La présente invention concerne en outre un ensemble de représentations graphiques, telles que décrites ci-dessous en liaison avec les premier à quatrième modes de réalisations de l'invention, qui permettent une appréciation des différences et des similarités entre un échantillon inconnu et une base d'apprentissage.

Les procédés et les systèmes selon la présente invention permettent de comparer un échantillon avec une base de données même dans le cas où les variables qui décrivent l'échantillon ne sont pas identiques à celles qui décrivent les échantillons de référence de la base de données. Selon ces méthodes et ces systèmes, les différences et les similarités entre l'échantillon sous test et les échantillons de référence sont mieux repérables.

Les avantages et les caractéristiques indiqués ci-dessus, ainsi que d'autres, apparaîtront plus clairement à la lecture de la description ci-dessous de certains modes de réalisation de l'invention, donnés à titre d'exemples illustratifs mais nullement limitatifs, et illustrés en se référant aux dessins en annexe, dans lesquels :

la Figure 1 est une représentation graphique classique montrant un espace multidimensionnel défini selon des variables de mesure particuliers, et des données d'échantillon représentées dans cet espace;

la Figure 2 est un graphe du genre classique montrant les surfaces des pics mesurés lors d'un processus d'analyse par chromatographie en phase gazeuse d'un premier jeu d'échantillons;

la Figure 3 est un schéma indiquant de façon générale les composants d'un système adapté à mettant en oeuvre la méthode selon des premier, deuxième, troisième et quatrième modes de réalisation de la présente invention;

la Figure 4 est un graphique rond du genre "camembert", produit selon un premier mode de réalisation de la présente invention, pour comparer, de façon globale, l'échantillon sous test par rapport à la base d'apprentissage;

la figure 5 est un exemple d'un deuxième graphique rond du genre "camembert", produit selon un deuxième mode de réalisation de la présente invention, destiné à comparer, de façon globale, un échantillon par rapport à une base d'apprentissage;

la Figure 6 montre deux représentations graphiques, produites selon un troisième mode de réalisation de la présente invention, pour montrer un exemple de la partition des variables de mesure entre trois classes;

la Figure 7 est une version annotée d'une représentation graphique, produite selon un quatrième mode de réalisation de la présente invention, pour comparer la valeur prise par une variable individuelle pour un échantillon sous test avec l'ensemble de valeurs prises par cette même variable pour les échantillons de référence;

la Figure 8 est une représentation graphique selon la Figure 7 relative à un exemple d'une variable d'une première classe;

la Figure 9 est une représentation graphique selon la Figure 7 relative à un exemple d'une variable d'une deuxième classe;

la Figure 10 est une représentation graphique selon la Figure 7 relative à un exemple d'un ensemble des variables des première et deuxième classes;

la Figure 11 est une représentation graphique selon la Figure 10 assortie de renseignements supplémentaires.

La description qui suit de divers modes de réalisation de la présente invention traitera de procédés d'analyse comparative relatifs à des mesures issues de la chromatographie en phase gazeuse. Or, l'invention n'est pas limitée à la technique utilisée pour obtenir les mesures décrivant les échantillons - l'homme du métier comprendra qu'il existe plusieurs autres procédés d'analyses instrumentales et sensoriels (par exemple, l'analyse par spectroscopie infrarouge, l'analyse par panel sensoriel, et autres) qui produisent un nombre de mesures qui peut varier d'un échantillon à l'autre et dont les mesures générées peuvent être traitées par les méthodes selon l'invention.

Par ailleurs, la description qui suit évoque le concept de l'analyse d'un échantillon. Il convient de noter que les échantillons proviennent de produits et que l'échantillon peut être de différents formes : un prélèvement du produit même, ou bien un échantillon des substances volatiles dégagées par le produit (c'est-à-dire un échantillon de l'odeur du produit), ou autres.

Les techniques d'analyses instrumentales et sensorielles qui décrivent des échantillons selon un nombre non fixe de variables peuvent produire, relativement à l'échantillon sous test, des valeurs pour des variables qui n'ont pas d'équivalent dans la base d'apprentissage. De la même façon, il se peut que l'échantillon sous test ne produise pas de mesure relative à l'une ou à plusieurs des variables décrivant les échantillons de la base d'apprentissage. Les présents inventeurs se sont rendus compte qu'il y a une perte de renseignements utiles si l'analyse comparative de l'échantillon par rapport à la base d'apprentissage porte uniquement sur les valeurs des variables qui sont communes à l'échantillon sous test et les échantillons de la base d'apprentissage. De même, ils ont compris qu'il peut y avoir des difficultés d'analyse si tous les calculs et toutes les représentations graphiques affichées portent sur l'ensemble des variables.

Plus particulièrement, les inventeurs ont déterminé une façon de classer les variables, issues de la technique d'analyse, qui permet une comparaison rapide de l'échantillon sous test avec les échantillons de référence sans perte de renseignements ni confusion (du fait d'u montant trop important de renseignements). Selon ce classement, on identifie non seulement les variables qui sont communes à l'échantillon sous test et les échantillons de la base d'apprentissage mais aussi les variables qui sont propres à l'échantillon sous test et celles qui sont propres aux échantillons de la base d'apprentissage.

En considérant que la base d'apprentissage comporte des données concernant un nombre *n* d'échantillons de référence $e_i$ (*i* = 1 à *n*), on peut désigner par *I* l'ensemble de ces échantillons. En d'autres termes :

$$I = \{ e_i \; ; \; i = 1{:}n \}$$

Si les échantillons de la base d'apprentissage sont décrits par un nombre *p* de variables $V^j$ (j = 1 à *p*), on peut désigner par $J_a$ l'ensemble de ces variables. En d'autres termes :

$$J_a = \{ V^j \; ; \; j = 1{:}p \}$$

La base d'apprentissage est décrite par un tableau ou une matrice *X* de dimensions **(n,p).** Le terme générique *X(ij)* de cette matrice est la valeur prise par la variable $V^j$ sur l'échantillon $e_i$. La matrice *X* est donc définie par

$$X(i,j) = V^j(e_i) \quad ,$$

avec *i* = 1 : *n* et *j* = 1 : *p*

La base de données associée aux échantillons d'apprentissage est entièrement décrite par les trois éléments :

$$\{ I \, , \; J_A \, , \; X \}$$

L'échantillon inconnu, qu'on note $e_u$ , est décrit par un ensemble *Ju* de *q* variables $Vu^k$. En d'autres termes :

$$Ju = \{ Vu^k \; ; \; k = 1{:}q \}$$

On associe à l'échantillon $e_u$ un vecteur *Xu* de dimension **q**. Le terme générique *Xu(k)* de ce vecteur est la valeur prise par la variable $Vu^k$ sur l'échantillon eu c'est-à-dire:

$$Xu(k) = Vu^k(e_u), \text{ avec } k = 1{:}q$$

avec *k* = 1:q

Selon la présente invention on considère que les deux ensembles de variables $J_a$ et $J_u$ forment trois classes et on associe à chaque mesure une indication de la classe à laquelle elle appartient:

Classe 1 : les variables communes à l'échantillon sous test et aux échantillons de la base d'apprentissage

On note $J_{intersection}$ l'ensemble des variables communes, c'est-à-dire les variables qui sont présentes dans les deux ensembles $J_a$ et $J_u$.

$$J_{intersection} = \{ V^j, \; V^j \in Ja \; \exists \; Vu^k \in Ju \, , \text{ tel que } V^j = Vu^k \}$$

Il convient de noter que ces variables dites "communes" ne seront pas nécessairement communes à tous les échantillons de référence, chacune de ces variables sera commune à l'échantillon sous test et à au moins l'un des échantillons de la base d'apprentissage.

Classe 2 : les variables propres aux échantillons d'apprentissage (la base des données)

On note **Propres($J_a$)** les variables qui sont propres aux échantillons d'apprentissage, qui sont constituées du complémentaire de l'ensemble $J_{intersection}$ dans $J_a$ ; c'est-à-dire :

$$Propres(J_a) = \{V^j, \; V^j \in Ja \;, \text{ pour tout } \; Vu^k \in Ju \; \text{ on } \; V^j \neq Vu^k \}$$

pour tout $Vu^k \in Ju$ on $V^j \neq Vu^k\}$

Classe 3 : les variables propres à l'échantillon inconnu

On note **Propres($J_u$)** les variables qui sont propres à l'échantillon sous test, qui sont constituées du complémentaire de l'ensemble $J_{intersection}$ dans $J_u$ ; c'est-à-dire :

$$Propres(J_u) = \{Vu^k, \; Vu^k \in Ju \;, \text{ pour tout } \; V^j \in Ja \; \text{ on } \; Vu^k \neq V^j \}$$

Selon la présente invention, lors de l'analyse comparative d'un échantillon par rapport à une base de données, il convient de classer les mesures prises sur l'échantillon sous test et sur les échantillons de référence selon l'appartenance de la caractéristique afférente à l'une des trois classes mentionnées ci-dessus. Des données indiquant l'appartenance des différentes caractéristiques aux classes mentionnées sont enregistrées afin d'être disponibles pour permettre la comparaison de l'échantillon sous test par rapport à la base d'apprentissage de diverses manières. Typiquement, ces données d'appartenance sont enregistrées de façon temporaire puisque, en ce qui concerne les variables décrivant la base d'apprentissage, le classement sera différent à chaque fois qu'on introduit au système un nouvel échantillon inconnu.

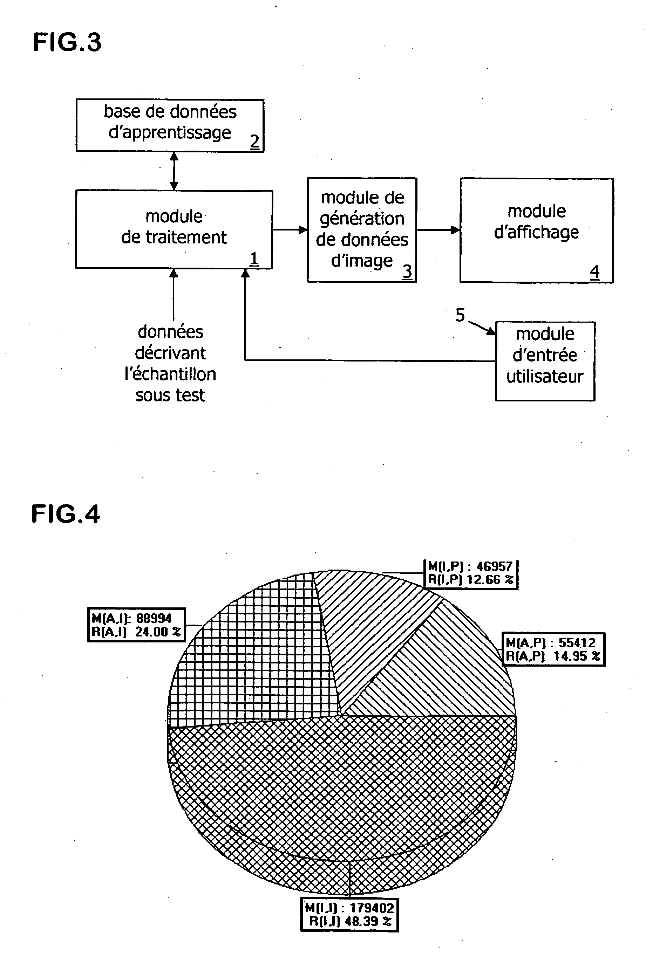

La Figure 3 est un schéma indiquant les composants majeurs d'un système d'analyse comparative adapté pour mettre en oeuvre les procédés de la présente invention. Le système comporte un module de traitement 1 qui reçoit en entrée des données décrivant un échantillon inconnu pour analyse. Ces données peuvent provenir d'appareils divers.

L'analyse comparative de l'échantillon inconnu se fait par rapport à une base d'apprentissage constituée de données concernant un certain nombre d'échantillons de référence. En général, les échantillons de référence sont des échantillons dont la nature ou la qualité est connue, ou bien possédant un paramètre particulier dont la valeur est connue (par exemple la teneur en une composante particulière), selon l'application du système. Typiquement, les données de la base d'apprentissage sont stockées dans une mémoire ou autre module de stockage 2 qui est soit local, soit éloigné du module de traitement 1. Le module de traitement 1 communique avec le module de stockage 2 au cours de l'analyse comparative de l'échantillon inconnu, afin de lire des données concernant les mesures prises sur les échantillons de référence.

Normalement, un seul et même système sert à l'apprentissage d'un modèle de traitement de données (modèle de reconnaissance ou autre) au cours d'une phase préalable d'apprentissage et à l'analyse comparative d'un échantillon inconnu par rapport à la base d'apprentissage au cours d'une phase ultérieure. Dans un tel cas, le module de traitement 1 est agencé de manière à pouvoir élaborer un modèle de traitement de données adapté à l'application visée et, en cas de besoin, de mettre ce modèle à jour (voir ci-dessous).

Le système d'analyse comparative selon l'invention peut permettre l'intervention d'un technicien, par exemple pour confirmer un résultat produit par le module de traitement 1. En outre, en général il convient d'afficher les résultats de l'analyse réalisée par le système. A ces fins, le système peut comporter un module 3 de génération de données d'image, un module d'affichage 4, et un module d'entrée 5 utilisable par le technicien afin d'introduire en entrée des données, des commandes ou bien des renseignements. Le module 3 de génération de données d'image peut être constitué, par exemple, d'un module classique de génération de données relatives à une interface utilisateur graphique. Le module d'affichage 4 peut être l'écran d'un ordinateur ou tout autre moyen d'affichage adapté. Le module d'entrée 5 peut comporter des moyens d'entrée classiques tels qu'une souris d'ordinateur, un clavier, un écran tactile, etc. Souvent on va concevoir le système 1 de façon à ce qu'il soit constitué d'un ordinateur programmé de façon à mettre en oeuvre les procédés décrits ci-dessous.

On va maintenant décrire des procédés selon différents modes de réalisation de la présente invention dans lesquels on rapproche un échantillon sous test et les échantillons de référence selon des paramètres de comparaison globale. La comparaison globale permet d'évaluer quelles sont les variables présentes ou bien absentes des ensembles de caractéristiques décrivant les échantillons de référence et l'échantillon inconnu, ou bien le "poids" relatif des variables dans les ensembles Ja et Ju.

Selon un premier mode de réalisation de la présente invention, les éléments de comparaison globale sont basés sur un résumé des valeurs prises par les différents ensembles de variables sur les échantillons d'apprentissage ou l'échantillon inconnu.

Pour l'échantillon inconnu, on associe un premier paramètre $M(I, I)$ aux valeurs prises, relatives à l'échantillon inconnu, par les caractéristiques qui sont communes à cet échantillon et à au moins l'un des échantillons de référence, comme suit :

$$M(I,I) = Mesure(Inconnu, Inter\,section) = \sum_{Vu^k \in J\,inter\,section} Vu^k(e_u)$$

Pour l'échantillon inconnu, on associe un deuxième paramètre $M(I, P)$ aux valeurs prises par les caractéristiques qui sont propres à l'échantillon inconnu, comme suit :

$$M(I,P) = Mesure(Inconnu, Pr\,opres) = \sum_{Vu^k \in Pr\,opres(Ju)} Vu^k(e_u)$$

Pour résumer les échantillons de référence de la base d'apprentissage, on associe un premier paramètre $M(A,I)$ aux valeurs prises, relatives aux échantillons de référence, par les caractéristiques qui sont communes à ces échantillons et à l'échantillon inconnu, comme suit :

$$M(A,I) = Mesure(Apprentissage, Inter\,section) = \sum_{V^j \in J\,inter\,section} Maximum\{V^j(e_i), i = 1:n\}$$

et on associe un deuxième paramètre $M(A,P)$ aux valeurs prises par les caractéristiques qui sont propres aux échantillons de référence, comme suit :

$$M(A,P) = Mesure(Apprentissage, Propre) = \sum_{V^j \in Pr\,opres(Ja)} Maximum\{V^j(e_i), i = 1:n\}$$

On définit alors les quatre rapports suivants

$$R(I,I) = 100 \times \frac{M(I,I)}{Mesures}, \quad R(I,P) = 100 \times \frac{M(I,P)}{Mesures},$$

$$R(A,I) = 100 \times \frac{M(A,I)}{Mesures}, \quad R(A,P) = 100 \times \frac{M(A,P)}{Mesures}$$

où

$$Mesures = M(I,I) + M(I,P) + M(A,I) + M(A,P)$$

A partir de ces rapports, on peut évaluer la similitude ou bien la différence entre l'échantillon de référence et la base d'apprentissage considérés de façon globale.

Cette appréciation peut se faire au niveau d'une représentation graphique des rapports - voir, par exemple la représentation de la Figure 4. Sur la Figure 4, les différents rapports calculés selon le procédé décrit ci-dessus sont représentés en forme de parts d'un camembert, les aires respectives des parts étant déterminées en fonction de la grandeur du rapport concerné. Le premier mode de réalisation n'est pas limité à cette manière de représenter les différents rapports - de façon générale, les différents rapports seront représentés graphiquement selon des régions dont les aires dépendent de la grandeur du rapport concerné.

Selon la représentation graphique de la Figure 4, chaque région est représentée selon un style de hachage différent afin de fournir à l'utilisateur une idée rapide sur le type de données qui sont représentées par région. Cependant, cette différentiation entre les régions peut être établi en employant des propriétés autres que le style de hachage des régions affichées : par exemple, on peut représenter les régions selon des couleurs différentes ou bien selon des niveaux de gris différents, remplir les régions selon des motifs différents, etc. L'utilisation de couleurs différentes pour représenter les régions respectives constitue une approche particulièrement bien adaptée à donner une appréciation intuitive de l'appartenance des données aux différentes classes.

La représentation graphique montrée à la Figure 4 est annotée afin de chiffrer les différents paramètres $M(I, I)$, $M(I,P)$, $M(A,I)$ et $M(A,P)$ ainsi que les rapports correspondants $R(I,I)$, $R(I,P)$, $R(A,I)$ et $R(A,P)$. Or, il n'est pas essentiel que la représentation graphique soit assortie de mentions de ce genre, ou bien on peut permettre à l'utilisateur d'exprimer le choix d'annoter ou non la représentation et de sélectionner les renseignements supplémentaires à afficher (au moyen d'options fournies par l'interface utilisateur).

Les rapports $R(I,I)$, $R(I,P)$, $R(A,I)$ et $R(A,P)$ peuvent également servir pour évaluer la similitude ou bien la différence entre l'échantillon inconnu et la base d'apprentissage, considérés de façon globale, dans le but de déterminer l'origine des différences. Plus précisément, on peut utiliser ces rapports afin d'évaluer si les différences entre l'échantillon inconnu et les échantillons de la base d'apprentissage sont suffisamment prononcées pour qu'une décision soit nécessaire quant à l'origine de ces différences (un défaut, ou bien une variation naturelle du produit).

La question de savoir si la différence globale entre l'échantillon sous test et la base d'apprentissage est suffisamment grande pour être significative peut être résolue de différentes façons. Selon un exemple, on peut régler le procédé afin que le rapport $R(I, P)$ soit comparé avec un seuil prédéterminé et, si $R(I, P) > \theta$ on considère que la différence entre l'échantillon sous test et la base d'apprentissage est significative. Un seuil paramétrable sera défini dans le protocole de calcul. Lorsque cette valeur seuil sera franchie, des alarmes seront générées par le système. Dans certain cas, la présence même de certaines variables de $Propres(J_u)$ sont synonymes d'un défaut. Dans ce cas, cette présence signifie une différence majeure (produit dangereux) et une alarme sera générée.

Une fois qu'une décision a été prise sur le fait que la différence globale entre l'échantillon sous test et la base d'apprentissage est significative, il convient soit de signaler un défaut (dans le cas où la différence provient d'un défaut du produit), soit de modifier le modèle de traitement de données utilisé par le système (dans le cas où la différence provient d'une variation naturelle du produit). Une information supplémentaire est nécessaire pour juger de ce dernier cas. Cette information peut être donnée par l'utilisateur du système en s'appuyant sur sa certitude de l'évolution de son produit ou bien elle peut être régi par une loi ou une formule déjà programmée par ailleurs. Afin de déterminer laquelle de ces deux actions doit être entreprise, on peut émettre un avertissement à l'utilisateur du système, lui indiquant l'existence d'une différence significative entre l'échantillon sous test et la base d'apprentissage, et l'inviter soit d'entreprendre lui-même l'action nécessaire, soit d'indiquer au système de quel cas il s'agit.

On peut adapter le système afin de réagir de façon appropriée aux indications introduites en entrée par l'utilisateur. Par exemple, si l'utilisateur introduit en entrée un signal indiquant que la différence provient d'une variation naturelle du produit, le système répondra à l'introduction de cette indication en effectuant la modification nécessaire du modèle de traitement de données, notamment en élaborant une version modifiée du modèle selon un traitement qui compte l'échantillon sous test parmi les échantillons de référence utilisé pour l'élaboration du modèle.

On va maintenant décrire un deuxième mode de réalisation de la présente invention selon lequel on rapproche l'échantillon sous test et les échantillons de référence selon un deuxième jeu de paramètres de comparaison globale. Selon ce deuxième mode de réalisation de la présente invention, les éléments de comparaison globale sont basés sur le calcul des cardinaux des trois classes définies précédemment. En effet, on peut noter $Cardinal(Ja+Ju)$ le nombre de variables différentes définies sur l'ensemble des échantillons d'apprentissage et de l'échantillon inconnu à comparer, où $Cardinal(Ja+Ju)$ est défini comme suit : $Cardinal(Ja \& Ju) = Cardinal(J\,intersection) + Cardinal(Propres(Ja)) + Cardinal(Propres(Ju))$ On peut ensuite définir les trois rapports suivants :

$$Rapport(\text{int}\,er\,\sec tion) = 100 \times \frac{Cardinal(J\,\text{int}\,er\,\sec tion)}{Cardinal(Ja \& Ju)}$$

$$Rapport(\Pr opres(Ju)) = 100 \times \frac{Cardinal(\Pr opres(Ju))}{Cardinal(Ja \& Ju)}$$

$$Rapport(\Pr opres(Ja)) = 100 \times \frac{Cardinal(\Pr opres(Ja))}{Cardinal(Ja \& Ju)}$$

Ces trois rapports constituent un deuxième jeu de paramètres permettant une comparaison globale de l'échantillon inconnu par rapport à la base d'apprentissage. A partir de ces rapports, on peut évaluer la similitude ou bien la différence entre l'échantillon de référence et la base d'apprentissage considérés de façon globale.

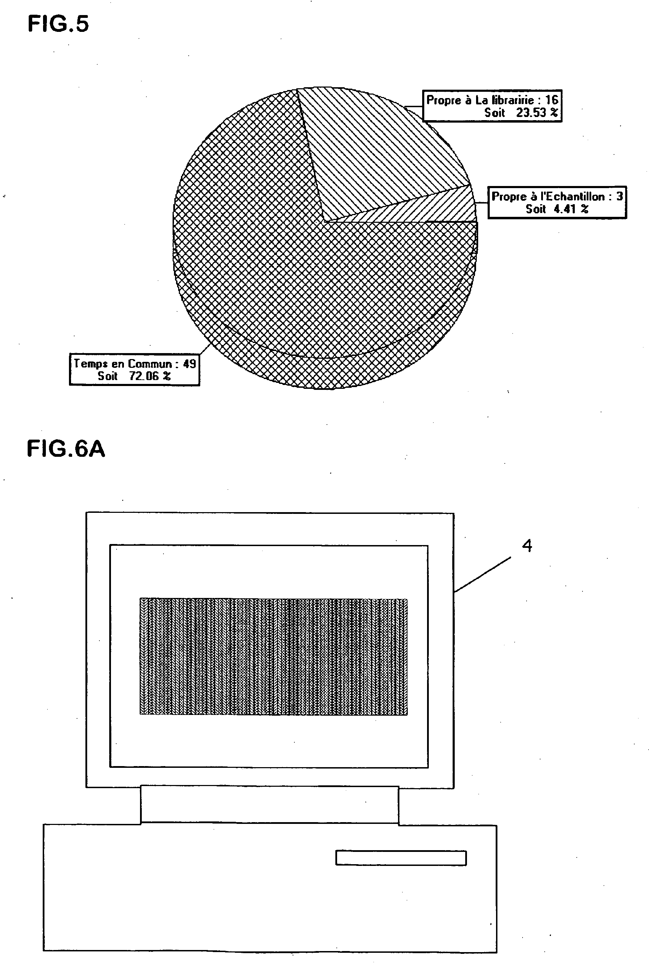

Cette appréciation peut se faire au niveau d'une représentation graphique des rapports - voir, par exemple la représentation de la Figure 5. Sur la Figure 5 (comme sur la Figure 4), les différents rapports sont représentés en forme de parts d'un camembert, les aires respectives des parts étant déterminées en fonction de la grandeur du rapport concerné, et des styles de hachage différents ont été utilisés pour remplir les différentes régions. Encore une fois, le présent mode de réalisation n'est pas limité à cette manière de représenter les différents rapports. Par ailleurs, on peut annoter la représentation graphique de la Figure 5, si nécessaire.

Les rapports *Rapport(Intersection), Rapport(Propres(Ju))*, et *Rapport(Propres(Ja))* peuvent également servir à évaluer la similitude ou bien la différence entre l'échantillon de référence et la base d'apprentissage, considérés de façon globale, dans le but de déterminer si la différence est significative et si cette différence provient d'un défaut, ou bien d'une variation naturelle du produit.

Plusieurs approches différentes sont possibles pour traiter les rapports *Rapport(Intersection), Rapport(Propres(Ju))*, et *Rapport(Propres(Ja))* afin d'évaluer si la différence globale entre l'échantillon inconnu et la base d'apprentissage est significative ou non. Par exemple, on peut comparer l'un de ces rapports avec un seuil prédéterminé respectif et, si le rapport est supérieur au seuil correspondant, décider que la différence globale entre l'échantillon inconnu et la base d'apprentissage est significative. Selon l'application, la seule présence d'une variable (variable relative à un risque) dans un échantillon inconnu peut suffire à déclencher une alarme. De même la seule absence d'une variable (variable relative à une qualité propre au produit) induirait une alarme.

En cas de différence significative entre l'échantillon inconnu et la base d'apprentissage, les mêmes mesures que celles décrites ci-dessus en relation avec le premier mode de réalisation de l'invention peuvent être adoptées - notamment on peut avertir l'utilisateur de l'existence de la différence significative et, si désiré, mettre en oeuvre des actions différentes selon des indications introduites en entrée par l'utilisateur. En particulier, les indications introduites en entrée par l'utilisateur peuvent provoquer l'élaboration d'un nouveau modèle d'identification (modèle de reconnaissance ou autre), en incluant, parmi les échantillons de référence utilisés lors de l'élaboration du modèle nouveau, l'échantillon inconnu.

Dans plusieurs cas, les variables utilisées pour décrire les échantillons ont une relation entre eux et on peut les ranger dans un ordre particulier. Par exemple, les mesures issues d'une analyse par chromatographie en phase gazeuse correspondent à des temps de rétention dans une colonne; on peut ordonner les mesures par rapport à la durée des différents temps de rétention. Selon un troisième mode de réalisation de la présente invention, on rapproche l'échantillon sous test et les échantillons de référence en se concentrant sur la distribution des variables de mesure des différentes classes identifiées ci-dessus. Plus particulièrement, selon le troisième mode de réalisation de l'invention il convient de déterminer l'ordre des membres de l'ensemble de variables *Ja* ∪ *Ju* et ensuite d'examiner la localisation (ou bien la distribution), dans l'ensemble ordonné, des variables de chaque classe.

Cette appréciation peut se faire au niveau d'une représentation graphique des variables ordonnées - voir, par exemple la représentation de la Figure 6A. Sur la Figure 6A les variables de chaque classe - celle des caractéristiques communes à l'échantillon inconnu et à la base d'apprentissage ($J_{intersection}$), celle des caractéristiques propres à l'échantillon inconnu (*Propres*(*Ju*)), et celle des caractéristiques propres à la base d'apprentissage (*Propres* (*Ja*)) - sont rangés dans un ordre qui correspond à une hiérarchie liée à la technique de mesure. Dans l'exemple de la Figure 6A, les variables correspondent à des temps de rétention dans une colonne de chromatographie en phase gazeuse et elles sont rangées par ordre croissant de temps de rétention.

Sur la Figure 6A les variables de chaque classe sont représentées en utilisant des styles de hachage différents. Or, de façon semblable aux représentations graphiques utilisées dans les premier et deuxième modes de réalisation, la différentiation entre les trois classes peut se faire selon un paramètre d'affichage autre que le style de hachage utilisé. En outre, sur la Figure 6A on fait abstraction des valeurs mesurées relatives à chaque variable, les variables étant toutes représentées selon une barre respective de dimension fixe. Il convient de remarquer qu'on peut varier la forme de la région représentant chaque variable sans sortir du cadre du présent mode de réalisation.

La représentation de la Figure 6A permet à l'utilisateur d'apprécier rapidement la distribution des variables de chaque classe par rapport au temps de rétention (ou bien par rapport à un ordre quelconque inhérent aux variables de mesure et par rapport auquel on aurait ordonné les variables). On peut également examiner ces distributions en employant des moyens de traitement automatisés.

Le fait d'avoir rangé les variables selon un ordre particulier, d'avoir identifié l'appartenance des variables aux classes indiquées ci-dessus, et d'avoir examiné la distribution des variables de chaque classe au sein du séquence établi, permet de repérer rapidement des cas de figure particuliers, comme, par exemple, le cas où toutes les variables propres à l'échantillon inconnu, ou toutes les variables propres à la base d'apprentissage, correspondent à une extrémité de l'ordre de rangement. Selon l'application, on peut considérer que certains des cas de figure sont "anormales" dans le sens où ils correspondent à une différence globale significative entre l'échantillon inconnu et la base d'apprentissage. Typiquement, cette différence est relative aux variables importantes qu'on ne souhaite pas rencontrer (apparition de défaut) ou voir disparaître (perte de qualité) dans l'échantillon inconnu. Comme dans les premier et deuxième modes de réalisation, le système peut avertir l'utilisateur de l'existence de cette différence globale significative et, éventuellement, répondre de façon appropriée aux indications introduites en entrée par l'utilisateur - notamment en élaborant un nouveau modèle de traitement de données si on estime que la différence globale entre l'échantillon inconnu et la base d'apprentissage provient d'une variation naturelle du produit analysé. Un plan d'expérience réalisé correctement pour la phase d'apprentissage permettra normalement d'inclure la variabilité supposée des échantillons. L'invention permet une identification rapide des défauts inconnus à priori.

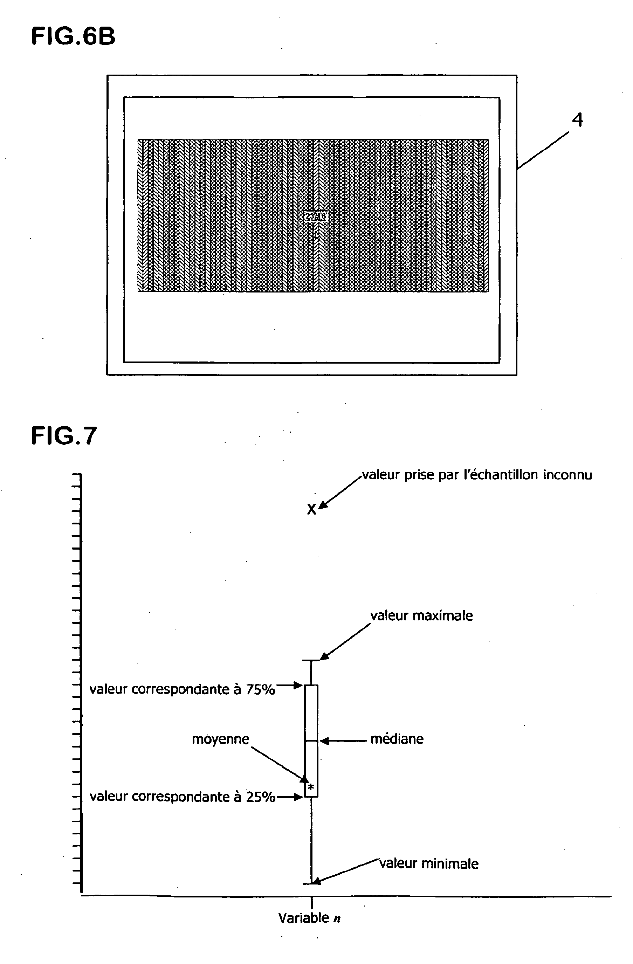

Par ailleurs, la Figure 6A montre comment on peut présenter sur un écran d'affichage la représentation graphique proposée. La représentation graphique peut être affichée tout simplement, sans étiquette ni axes, comme on peut le voir sur la Figure 6A. Or, on peut adapter l'interface graphique afin d'afficher d'autres renseignements en liaison avec la simple représentation graphique: par exemple, un axe marqué pour indiquer le paramètre selon lequel on a ordonné les variables, les noms des variables, etc. Si désiré, on peut afficher ou non ces renseignements annexes suite à une action de l'utilisateur. Par exemple, l'interface graphique peut d'abord afficher la simple représentation graphique de la Figure 6A puis, si l'utilisateur utilise une souris d'ordinateur pour positionner un curseur sur la barre correspondant à une variable "temps de rétention = 23.16 secondes" et clique, le temps de rétention correspondant à cette variable sera affiché comme on peut le voir sur la Figure 6B.

Les techniques décrites jusqu'ici concernent des paramètres permettant une comparaison globale de l'échantillon inconnu par rapport à la base d'apprentissage. Or, il peut s'avérer intéressant d'examiner les différences et les similitudes qui se trouvent au niveau des variables individuelles. Selon un quatrième mode de réalisation de l'invention, on compare la valeur d'une caractéristique telle qu'on la mesurée sur l'échantillon inconnu, à la distribution statistique de valeurs de cette même caractéristique telles que mesurées sur les échantillons de référence.

L'approche préconisée pour comparer la valeur mesurée sur l'échantillon inconnu et la distribution statistique de valeurs applicable à la base d'apprentissage consiste à l'élaboration d'une représentation en forme de boîte, de préférence en forme de boîte à moustaches. La représentation d'une distribution statistique générale en forme de "boîte à pattes" ou en "boîte à moustaches" (en anglais "boxplot" ou "box and whiskers plot") a été proposé par Tukey en 1977. La Figure 7 montre un exemple d'une représentation en forme de boîte à moustaches des valeurs mesurées relative à une caractéristique particulière et permet d'expliquer la correspondance entre les diverses valeurs statistiques et la forme représentée.

Selon l'exemple de la Figure 7, le côté inférieur de la boîte coïncide avec la valeur correspondante à 25% des échantillons de référence - c'est-à-dire que cette valeur de la variable en question est prise par au moins 25% de l'ensemble d'échantillons de la base d'apprentissage - et le côté supérieur de la boîte coïncide avec la valeur correspondante à 75% des échantillons de référence. Un trait horizontal vers le centre de la boîte indique la valeur médiane et une étoile indique la valeur moyenne. Si la représentation de la Figure 7 correspondait à une représentation en forme de boîte simple, il n'y aurait plus de traits en sus de ceux mentionnés jusqu'ici. Or, ce dessin montrant une représentation en forme de boîte à moustaches, il existe également une ligne verticale s'étendant depuis le côté supérieur de la boîte vers le haut et une ligne verticale s'étendant depuis le côté inférieur de la boîte vers le bas. La ligne verticale supérieure s'étend jusqu'à la valeur maximale de la variable en question telle que mesurée relative à un des échantillons de référence et la ligne verticale inférieure s'étend jusqu'à la valeur minimale.

Un diagramme en forme de boîte, ou bien en forme de boîte à moustaches, peut revêtir des configurations différentes. Par exemple, les côtés inférieur et supérieur de la boîte peuvent correspondre à d'autres pourcentiles et non pas aux quartiles, des traits correspondant à des valeurs autres que la médiane peuvent être dessinés à travers la boîte, les extrémités des « moustaches » peuvent correspondre non pas aux valeurs minimales et maximales mais à des valeurs correspondantes à d'autres pourcentiles (par exemple, à 5% et à 95%).

Selon le quatrième mode de réalisation de la présente invention, on superpose sur la représentation graphique en forme de boîte à moustaches (ou bien en forme de boîte) une indication de la valeur de la variable en question telle que mesurée sur l'échantillon inconnu. La Figure 7 montre un exemple de cette approche et correspond au cas où la valeur applicable à l'échantillon de référence est nettement supérieure à la valeur maximale prise par l'ensemble des échantillons de référence. Un cas particulier concerne l'apparition de nouvelles variables non présentes dans les échantillons de référence.

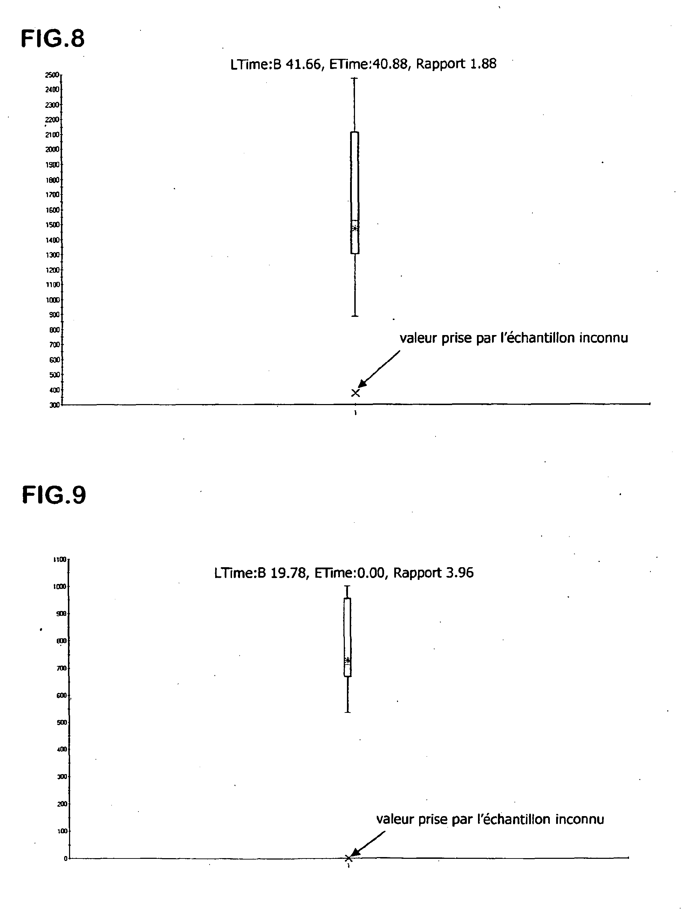

La Figure 8 montre un exemple du cas contraire, où la valeur applicable à l'échantillon de référence est nettement inférieure à la valeur minimale prise par l'ensemble des échantillons de référence. Comme on peut le voir sur la Figure 8, on peut afficher des renseignements en liaison avec la représentation graphique en forme de boîte à moustaches, soit de façon automatisée, soit selon les actions de l'utilisateur. Sur la Figure 8 les renseignements affichés sont "L.Time : B.41.66" - c'est-à-dire le temps de rétention de la "librairie" (base d'apprentissage) relatif à la colonne B est 41.66s - et "E-Time :40.88" - c'est-à-dire que le temps de rétention d'échantillon inconnu est 40.88s.

Pour chaque variable qu'on veut, on peut déterminer le coefficient C suivant :

$$C = (X(\text{inconnu}) - \text{Moyenne(apprentissage)})/(\text{EcartType(Apprentissage)}),$$

où X(inconnu) représente la valeur applicable à cette variable relative à l'échantillon inconnu.

Ce coefficient C permet de savoir de combien on est loin de la moyenne de la base d'apprentissage ; la différence est significative si ce coefficient est supérieur à 3. Plus particulièrement, si ce coefficient est supérieur à 3 alors la probabilité que l'échantillon inconnu est le même produit que les échantillons de la base d'apprentissage est inférieure à 0.002.

L'identification de l'origine d'un défaut peut être réalisée du fait de l'apparition de nouvelles variables et des alarmes sont de même générées lorsque l'intensité mesurée de ces nouveaux éléments dépasse un seuil déterminé. L'utilisation de produits référents peut de même permettre une identification du composé incriminé.

Les Figures 7 et 8 montrent des diagrammes relatifs à des variables qui sont communes à l'échantillon inconnu et à la base d'apprentissage, c'est-à-dire des variables de la première classe (l'ensemble $\boldsymbol{J_{intersection}}$). Or, on peut utiliser le même genre de diagramme relatif aux variables de la deuxième classe (l'ensemble $\boldsymbol{Propres(Ja)}$), en affichant une valeur nulle pour l'échantillon inconnu (voir la Figure 9). En outre, on peut afficher ensemble plusieurs diagrammes en forme de boite à moustaches, par exemple des diagrammes relatives à toutes les variables de la première classe ou bien des diagrammes relatives à toutes les variables des première et deuxième classes.

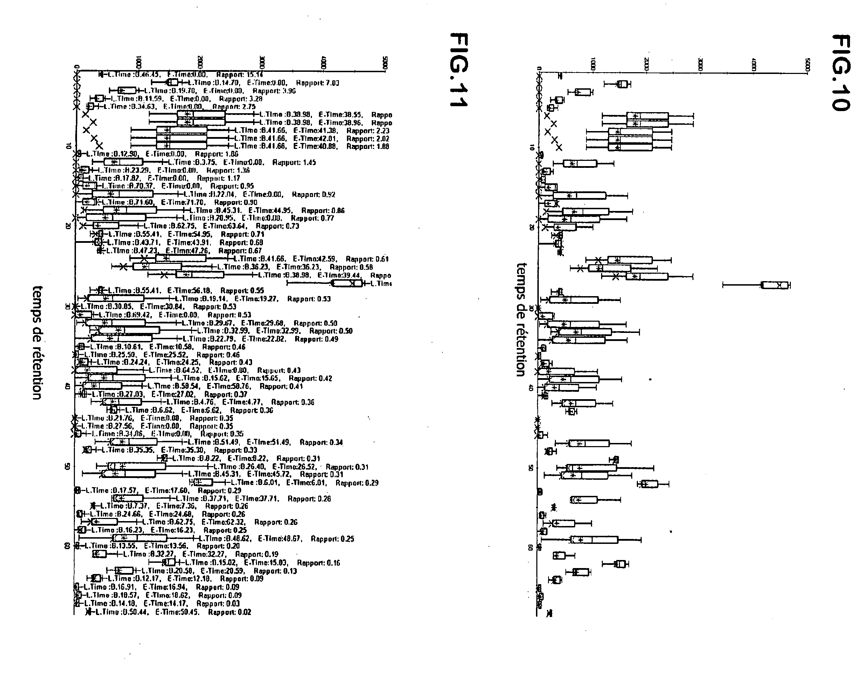

Les Figures 10 et 11 montrent un exemple selon le cas où on affiche simultanément des diagrammes en forme de boîte à moustaches relatives à toutes les variables des première et deuxième classes; sur la Figure 10 les données sont représentées sans annotation alors que sur la Figure 11 les diagrammes sont annotées, notamment en indiquant les valeurs applicables aux différentes variables telles que mesurées pour la librairie (la base d'apprentissage) et bien pour l'échantillon sous test, ainsi que le coefficient, C, mentionné ci-dessus (dénommé "rapport" sur les figures). Encore une fois, on peut adapter le système afin d'offrir à l'utilisateur diverses options en ce qui concerne les renseignements à afficher en tant qu'annotation et l'évènement qui déclenche l'affichage de l'annotation (actions de l'utilisateur, affichage automatique, etc.).

Dans le cas où on affiche simultanément des diagrammes en forme de boîte à moustaches relatives à des variables de différentes classes (1ère et 2ème classes), la manière dont les diagrammes sont représentées peut varier selon la classe concernée. Par exemple, on peut afficher les diagrammes (et, ou bien, les annotations afférentes) relatifs à des variables de la première classe selon une première couleur et les diagrammes relatifs à des variables de la deuxième classe selon une deuxième couleur.

Bien que les différents modes de réalisation de l'invention aient été décrits séparément, il convient de noter qu'un système selon l'invention peut mettre en oeuvre une combinaison de deux ou de plusieurs des procédés (voire tous les procédés) décrits ci-dessus en liaison avec les premier à quatrième modes de réalisation. Dans le cas où un même système met en oeuvre plusieurs des procédés des premier à quatrièmes modes de réalisation de l'invention, on peut régler le système de façon à ce que les données d'image générées pour représenter les variables (ou bien pour représenter les valeurs des variables) d'une classe particulière soient affichées selon la même couleur (style de hachage, etc.) dans toutes les représentations graphiques. Ceci rend plus simple l'interprétation de l'ensemble de représentations graphiques.

Bien que des modes de réalisation particuliers de la présente invention aient été décrits ci-dessus, l'homme du métier comprendra que diverses modifications et aménagements peuvent se pratiquer dans ceux-ci sans sortir du cadre de la présente invention.

Plus particulièrement, bien que la Figure 3 annexée montre une distribution particulière de fonctions entre divers composants d'un système, l'homme du métier comprendra que la distribution de fonctions peut se faire différemment. En outre, selon la façon dont on met en oeuvre le système, il se peut qu'on ne puisse pas identifier des modules individuels qui remplissent les fonctions énoncées ; on peut faire une combinaison de certains des modules représentés à la Figure 3. Par ailleurs, les divers modules représentés à la Figure 3 ne correspondent pas nécessairement à des éléments d'équipement physiques. On peut (et, en général, on va) réaliser les fonctions correspondant au moyen d'un logiciel.

**Revendications**

1. Procédé de contrôle qualité adapté à déterminer si la qualité d'un produit atteigne ou non un niveau prédéterminé par analyse comparative d'un échantillon sujet, provenant dudit produit, par rapport à un ensemble d'échantillons de référence provenant également de produits, la qualité des produits correspondant aux échantillons de référence étant du niveau prédéterminé, ce procédé de contrôle qualité comportant les étapes consistant à :

   a) mesurer les valeurs d'une pluralité de caractéristiques décrivant les échantillons de référence par l'application, auxdits échantillons de référence, d'un procédé d'analyse par chromatographie en phase gazeuse qui génère des valeurs relatives à un nombre variable de pics correspondant à des temps de rétention différents, ledit nombre étant dépendant du produit analysé;
   b) mesurer les valeurs d'une pluralité de caractéristiques décrivant l'échantillon sujet par l'application, audit échantillon sujet, dudit procédé d'analyse par chromatographie en phase gazeuse;
   c) repérer l'ensemble des caractéristiques évaluées lors des étapes précédentes;
   d) parmi les caractéristiques repérées à l'étape c):

      i) identifier, en tant qu'une première classe de caractéristiques, les caractéristiques relatives aux pics communs à l'échantillon sujet et à au moins l'un des échantillons de référence,
      ii) identifier, en tant qu'une deuxième classe de caractéristiques, les caractéristiques relatives aux pics propres aux échantillons de référence, et
      iii) identifier, en tant qu'une troisième classe de caractéristiques, les caractéristiques relatives aux pics propres à l'échantillon sujet;

   e) associer aux valeurs mesurées lors des étapes a) et b) une indication de la classe affectée à la caractéristique afférente lors de l'étape d) ;
   f) en ce qui concerne les caractéristiques repérées à l'étape c), quantifier le rapport entre:

      i) le nombre des valeurs mesurées qui sont associés à la troisième classe lors de l'étape e) ;
      ii) le nombre des valeurs mesurées qui sont associés à la deuxième classe lors de l'étape e) ;

   et le nombre de valeurs de toutes les caractéristiques repérées à l'étape c) telles que mesurées lors des étapes a) et b) ; et
   g) produire un avertissement signalant l'existence d'une différence significative entre l'échantillon sujet et l'ensemble d'échantillons de référence, correspondant à un défaut de qualité potentiel, lorsque la grandeur d'au moins l'un des rapports calculés à l'étape f) dépasse un premier seuil prédéterminé.

2. Procédé de contrôle qualité selon la revendication 1, dans lequel l'étape consistant à quantifier des rapports consiste à:

   quantifier le rapport entre:

      i) les valeurs mesurées des caractéristiques relatives aux pics propres à l'échantillon sujet,
      ii) les valeurs mesurées des caractéristiques relatives aux pics propres aux échantillons de référence,
      iii) les valeurs de toutes les caractéristiques relatives aux pics communs à l'échantillon sujet et à au moins l'un des échantillons de référence, telles que mesurées relatives à l'échantillon sujet,
      iv) les valeurs de toutes les caractéristiques relatives aux pics communs à l'échantillon sujet et à au moins l'un des échantillons de référence, telles que mesurées relatives aux échantillons de référence,

   et les valeurs de toutes les caractéristiques repérées à l'étape c) telles que mesurées lors des étapes a) et b);
   et le procédé de contrôle qualité comporte l'étape consistant à :

      h) pour chacun des rapports calculés à l'étape f), générer des données d'image définissant une région dont l'aire dépend de la grandeur dudit rapport et afficher une image selon lesdites données d'image, la manière de représenter chaque région étant différente.

3. Procédé de contrôle qualité selon la revendication 1 ou 2, comportant les étapes consistant à:

   j) parmi les caractéristiques repérées à l'étape c), quantifier la partie constituée de toutes les caractéristiques relatives aux pics communs à l'échantillon sujet et à au moins l'un des échantillons de référence, la partie constituée de caractéristiques relatives aux pics propres aux échantillons de référence, et la partie constituée de caractéristiques relatives aux pics propres à l'échantillon sujet;

k) pour chacune des parties quantifiées à l'étape j), générer des données d'image définissant une région dont l'aire dépend de la grandeur de ladite partie; et

l) afficher une image selon les données d'image générées à l'étape k), la manière de représenter chaque région étant différente.

**4.** Procédé de contrôle qualité selon la revendication 1, 2 ou 3, comportant les étapes consistant à:

j) parmi les caractéristiques repérées à l'étape c), quantifier la partie constituée de toutes les caractéristiques relatives aux pics communs à l'échantillon sujet et à au moins l'un des échantillons de référence, la partie constituée de caractéristiques relatives aux pics propres aux échantillons de référence, et la partie constituée de caractéristiques relatives aux pics propres à l'échantillon sujet; et

m) produire un avertissement signalant l'existence d'une différence significative entre l'échantillon sujet et l'ensemble d'échantillons de référence, correspondant à un défaut de qualité potentiel, si la grandeur d'au moins l'une des parties calculées à l'étape j) dépasse un deuxième seuil prédéterminé respectif.

**5.** Procédé de contrôle qualité selon l'une quelconque des revendications 1 à 4, comportant les étapes consistant à :

j) parmi les caractéristiques repérées à l'étape c), quantifier la partie constituée de toutes les caractéristiques relatives aux pics communs à l'échantillon sujet et à au moins l'un des échantillons de référence, la partie constituée de caractéristiques relatives aux pics propres aux échantillons de référence, et la partie constituée de caractéristiques relatives aux pics propres à l'échantillon sujet;

n) définir un ordre pour ordonner les caractéristiques repérées à l'étape c);

o) déterminer la distribution, au sein de l'ordre défini à l'étape n), des caractéristiques relatives aux pics qui sont communs à l'échantillon sujet et à au moins l'un des échantillons de référence, des caractéristiques relatives aux pics qui sont propres aux échantillons de référence, et des caractéristiques relatives aux pics qui sont propres à l'échantillon sujet; et

p) analyser la distribution déterminée à l'étape o) afin de contrôler si, oui ou non, une condition est remplie pour la production d'un avertissement.

**6.** Procédé de contrôle qualité selon l'une quelconque des revendications 1 à 5, comportant les étapes consistant à :

j) parmi les caractéristiques repérées à l'étape c), quantifier la partie constituée de toutes les caractéristiques relatives aux pics communs à l'échantillon sujet et à au moins l'un des échantillons de référence, la partie constituée de caractéristiques relatives aux pics propres aux échantillons de référence, et la partie constituée de caractéristiques relatives aux pics propres à l'échantillon sujet;

n) définir un ordre pour ordonner les caractéristiques repérées à l'étape c);

q) générer des premières données d'image relatives aux caractéristiques relatives aux pics communs à l'échantillon sujet et à au moins l'un des échantillons de référence, des deuxièmes données d'image relatives aux caractéristiques relatives aux pics propres aux échantillons de référence, et des troisièmes données d'image relatives aux caractéristiques relatives aux pics propres à l'échantillon sujet; et

r) afficher une image selon les premières, les deuxièmes et les troisièmes données d'image de manière à localiser sur le plan d'image des données d'image relatives à chaque caractéristique selon la localisation de cette caractéristique au sein de l'ordre défini à l'étape n), la manière de représenter chaque caractéristique étant différente selon si cette caractéristique correspond aux premières, ou deuxièmes ou aux troisièmes données d'image.

**7.** Procédé de contrôle qualité selon la revendication 6, et comportant les étapes consistant à :

s) pour au moins l'une des caractéristiques relatives aux pics communs à l'échantillon sujet et à un échantillon de référence, générer des données d'image définissant un diagramme boîte à pattes sur la base des valeurs de cette caractéristique telles que mesurées relatives aux échantillons de référence; et

t) afficher un diagramme boîte à pattes selon les données d'image générées à l'étape s) et y superposer des données d'image relatives à la valeur de ladite au moins une caractéristique telle que mesurée relative à l'échantillon sujet.

8. Procédé de contrôle qualité selon la revendication 7, et comportant l'étape consistant à :

   u) recevoir en entrée des données de sélection provenant d'un utilisateur;

   dans lequel la caractéristique ou bien les caractéristiques pour lesquelles des données d'image sont générées dans l'étape s) et affichées lors de l'étape t) consistent en des caractéristiques identifiées par des données de sélection reçues à l'étape u).

9. Procédé de contrôle qualité selon la revendication 7, dans lequel des données d'image sont générées dans l'étape s), et affichées ensemble lors de l'étape t), relatives à toutes les caractéristiques relatives aux pics qui sont communs à l'échantillon sujet et à au moins un échantillon de référence.

10. Procédé de contrôle qualité selon la revendication 7 ou 9, dans lequel des données d'image sont générées dans l'étape s), et affichées ensemble lors de l'étape t), relatives à toutes les caractéristiques relatives aux pics propres aux échantillons de référence, les données d'image affichées relatives à l'échantillon sujet et superposées sur les données d'image relatives aux caractéristiques relatives aux pics propres aux échantillons de référence étant des données indiquant une valeur nulle.

11. Procédé de contrôle qualité selon la revendication 7, 8, 9 ou 10, et comportant l'étape consistant à générer un avertissement si la valeur d'un coefficient $C$ dépasse un troisième seuil, où :

$$C = (X(\text{inconnu}) - \text{Moyenne}(\text{apprentissage}))/(\text{EcartType}(\text{Aprentissage})),$$

où X(inconnu) est la valeur d'une caractéristique telle que mesurée relative à l'échantillon sujet, Moyenne(apprentissage) est la moyenne des valeurs de ladite caractéristique telles que mesurées relatives aux échantillons de référence et EcartType(Apprentissage)) est l'écart type applicable aux valeurs de ladite caractéristique telles que mesurées relatives aux échantillons de référence.

12. Procédé de contrôle qualité selon l'une des revendications 1 à 11, et comportant les étapes consistant à :

   v) recevoir en entrée des données d'identification provenant d'un utilisateur, ces données d'identification indiquant soit que l'échantillon sujet relatif auquel un avertissement a été produit est défectueux soit que ledit échantillon sujet représente une variante autorisée par rapport aux échantillons de référence ; et
   w) si les données d'identification reçues à l'étape v) indiquent que l'échantillon sujet représente une variante autorisée, mettre à jour un modèle de traitement de données afin d'inclure ledit échantillon sujet parmi les échantillons de référence.

13. Programme d'ordinateur possédant un groupe d'instructions qui, lorsqu'on les utilise sur un ordinateur, font que l'ordinateur effectue les opérations du procédé de contrôle qualité défini dans l'une quelconque des revendications 1 à 12.

14. Système de contrôle qualité adapté à déterminer si la qualité d'un produit atteigne ou non un niveau prédéterminé par analyse comparative d'un échantillon sujet, provenant dudit produit, par rapport à un ensemble d'échantillons de référence provenant également de produits, la qualité des produits correspondant aux échantillons de référence étant du niveau prédéterminé, ledit système comportant un ordinateur programmé de manière à effectuer les opérations du procédé de contrôle qualité défini dans l'une quelconque des revendications 1 à 12.

**Claims**

1. A quality control method adapted to determine whether or not the quality of a product reaches a predetermined level by performing a comparative analysis of a subject sample, taken from said product, with respect to a set of reference samples also taken from products, wherein the quality of the products corresponding to the reference samples is of the determined level, said quality control method comprising the steps of:

   a) measuring the values of a plurality of characteristics describing the reference samples by applying, to said reference samples, a method of analysis by gas chromatography that generates values related to a variable number of peaks corresponding to different retention times, said number depending on the product being analyzed;

b) measuring the values of a plurality of characteristics describing the subject sample by applying, to said subject sample, said method of analysis by gas chromatography;

c) establishing the set of characteristics evaluated in the preceding steps;

d) among the characteristics determined in step c):

i) identifying, as a first class of characteristics, the characteristics relating to the peaks common to the subject sample and to at least one of the reference samples,

ii) identifying, as a second class of characteristics, the characteristics relating to the peaks peculiar to the reference samples, and

iii) identifying, as a third class of characteristics, the characteristics relating to the peaks peculiar to the subject sample;

e) associating with the values measured in steps a) and b) an indication of the class assigned to the related characteristic in step d);

f) in relation to the characteristics determined in step c), quantifying the ratio between:

i) the number of measured values associated with the third class in step e);

ii) the number of measured values associated with the second class in step e);

and the number of values of all the characteristics determined in step c), as measured in steps a) and b); and

g) producing a warning indicating the existence of a significant difference between the subject sample and the set of reference samples, corresponding to a potential quality defect, when the magnitude of at least one of the ratios calculated in step f) exceeds a first predetermined threshold.

2. A quality control method according to claim 1, wherein the ratio-quantifying step comprises:

quantifying the ratio between:

i) the measured values of the characteristics relating to the peaks peculiar to the subject sample,

ii) the measured values of the characteristics relating to the peaks peculiar to the reference samples,

iii) the values of all the characteristics relating to the peaks common to the subject sample and to at least one of the reference samples, as measured with respect to the subject sample,

iv) the values of all the characteristics relating to the peaks common to the subject sample and to at least one of the reference samples, as measured with respect to the reference samples,

and the values of all the characteristics determined in step c), as measured in steps a) and b);

and the quality control method comprises the step of:

h) for each of the ratios calculated in step f), generating image data defining a region whose area depends on the magnitude of said ratio, and displaying an image according to said image data, wherein the way of representing each region is different.

3. A quality control method according to claim 1 or 2, comprising the steps of:

j) among the characteristics determined in step c), quantifying the proportion comprised of all the characteristics relating to the peaks common to the subject sample and to at least one of the reference samples, the proportion comprised of characteristics relating to the peaks peculiar to the reference samples, and the proportion comprised of characteristics relating to the peaks peculiar to the subject sample;

k) for each of the proportions quantified in step j), generating image data defining a region whose area depends on the size of said proportion; and

l) displaying an image according to the image data generated in step k), wherein the way of representing each region is different.

4. A quality control method according to claim 1, 2 or 3, comprising the steps of:

j) among the characteristics determined in step c), quantifying the proportion comprised of all the characteristics relating to the peaks common to the subject sample and to at least one of the reference samples, the proportion comprised of characteristics relating to the peaks peculiar to the reference samples, and the proportion comprised of characteristics relating to the peaks peculiar to the subject sample; and

m) producing a warning indicating the existence of a significant difference between the subject sample and the set of reference samples, corresponding to a potential quality defect, if the size of at least one of the proportions calculated in step j) exceeds a respective second predetermined threshold.

**5.** A quality control method according to any one of claims 1 to 4, comprising the steps of:

j) among the characteristics determined in step c), quantifying the proportion comprised of all the characteristics relating to the peaks common to the subject sample and to at least one of the reference samples, the proportion comprised of characteristics relating to the peaks peculiar to the reference samples, and the proportion comprised of characteristics relating to the peaks peculiar to the subject sample;

n) defining an order for ordering the characteristics determined in step c);

o) determining the distribution, within the order defined in step n), of the characteristics relating to the peaks that are common to the subject sample and to at least one of the reference samples, of the characteristics relating to the peaks that are peculiar to the reference samples, and of the characteristics relating to the peaks that are peculiar to the subject sample; and

p) analysing the distribution determined in step o) so as to check whether or not a condition for producing a warning is fulfilled.

**6.** A quality control method according to any one of claims 1 to 5, comprising the steps of:

j) among the characteristics determined in step c), quantifying the proportion comprised of all the characteristics relating to the peaks common to the subject sample and to at least one of the reference samples, the proportion comprised of characteristics relating to the peaks peculiar to the reference samples, and the proportion comprised of characteristics relating to the peaks peculiar to the subject sample;

n) defining an order for ordering the characteristics determined in step c);

q) generating first image data in respect of the characteristics relating to the peaks common to the subject sample and to at least one of the reference samples, second image data in respect of the characteristics relating to the peaks peculiar to the reference samples, and third image data in respect of the characteristics relating to the peaks peculiar to the subject sample; and

r) displaying an image according to the first, second and third image data in such a way to localize, in the image plane, image data related to each characteristic according to the location of this characteristic within the order defined in step n), wherein the way of representing each characteristic is different according to whether this characteristic corresponds to the first, second or third image data.

**7.** A quality control method according to claim 6, and comprising the steps of:

s) for at least one of the characteristics relating to the peaks common to the subject sample and to a reference sample, generating image data defining a box-and-whiskers plot based on the values of this characteristic as measured with respect to the reference samples; and

t) displaying a box-and-whiskers plot according to the image data generated in step s), and superimposing thereon image data relating to the value of said at least one characteristic as measured with respect to the subject sample.

**8.** A quality control method according to claim 7, and comprising the step of:

u) receiving selection data input by a user;

wherein the characteristic(s) for which image data is generated in step s) and displayed in step t) consists of characteristic(s) identified by the selection data received in step u).

**9.** A quality control method according to claim 7, wherein image data is generated in step s), and displayed together in step t), with respect to all the characteristics relating to the peaks that are common to the subject sample and to at least one reference sample.

**10.** A quality control method according to claim 7 or 9, wherein image data is generated in step s), and displayed together in step t), with respect to all the characteristics relating to the peaks peculiar to the reference samples, wherein the displayed image data related to the subject sample and superimposed on the image data in respect of the characteristics relating to the peaks peculiar to the reference samples are data indicating a null value.

**11.** A quality control method according to claim 7, 8, 9 or 10, and comprising the step of generating a warning if the value of a coefficient $C$ exceeds a third threshold, wherein:

$$C = (X(\text{unknown}) - \text{Mean(learning)}) / (\text{Standard\_Deviation(learning)}),$$

where X(unknown) is the value of a characteristic as measured with respect to the subject sample, Mean(learning) is the mean of the values of said characteristic as measured with respect to the reference samples and Standard_ Deviation (learning) is the standard deviation applicable to the values of said characteristic as measured with respect to the reference samples.

**12.** A quality control method according to one of claims 1 to 11, and comprising the steps of:

v) receiving identification data input by a user, said identification data indicating either that the subject sample relating to which a warning has been produced is defective or that said subject sample represents a permitted variant with respect to the reference samples; and
w) if the identification data received in step v) indicates that the subject sample represents a permitted variant, updating a data processing model so as to include said subject sample among the reference samples.

**13.** A computer program having a set of instructions that, when executed on a computer, make the computer perform the operations of the quality control method defined in any one of claims 1 to 12.

**14.** A quality control system adapted to determine whether or not the quality of a product reaches a predetermined level by performing a comparative analysis of a subject sample, taken from said product, with respect to a set of reference samples also taken from products, wherein the quality of the products corresponding to the reference samples is of the determined level, said system comprising a computer programmed in such a way to perform the operations of the quality control method defined in any one of claims 1 to 12.

**Patentansprüche**

**1.** Qualitätskontrollverfahren, das geeignet ist, mittels einer Vergleichsanalyse eines von einem Produkt stammenden Prüfmusters gegenüber einer Menge von ebenfalls von Produkten stammenden Referenzmustern zu bestimmen, ob die Qualität des Produktes ein vorbestimmtes Niveau erreicht oder nicht, wobei die Qualität der Produkte, die den Referenzmustern entsprechen, das vorbestimmte Niveau haben, wobei dieses Qualitätskontrollverfahren die Schritte umfaßt, die darin bestehen:

a) die Werte einer Vielzahl von die Referenzmuster beschreibenden Merkmalen durch Anwendung eines Gaschromatographie-Analyseverfahrens auf die Referenzmuster zu messen, welches Verfahren Werte bezüglich einer variablen Anzahl von Peaks erzeugt, die unterschiedlichen Retentionszeiten entsprechen, wobei die Anzahl von dem analysierten Produkt abhängig ist,
b) die Werte einer Vielzahl von das Prüfmuster beschreibenden Merkmalen durch Anwendung des Gaschromatographie-Analyseverfahrens auf das Prüfmuster zu messen,
c) alle während der vorhergehenden Schritte ausgewerteten Merkmale festzulegen,
d) unter den bei Schritt c) festgelegten Merkmalen:

i) die Merkmale bezüglich der Peaks, die dem Prüfmuster und wenigstens einem der Referenzmuster gemein sind, als eine erste Merkmalsklasse zu identifizieren,
ii) die Merkmale bezüglich der Peaks, die den Referenzmustern eigen sind, als eine zweite Merkmalsklasse zu identifizieren, und
iii) die Merkmale bezüglich der Peaks, die dem Prüfmuster eigen sind, als eine dritte Merkmalsklasse zu identifizieren,

e) den bei Schritt a) und Schritt b) gemessenen Werten eine Angabe der Klasse, die bei Schritt d) dem zufallenden Merkmal zugewiesen wird, zuzuordnen,

f) hinsichtlich der bei Schritt c) festgelegten Merkmale das Verhältnis zwischen:

i) der Anzahl der gemessenen Werte, die bei Schritt e) der dritten Klasse zugeordnet werden,
ii) der Anzahl der gemessenen Werte, die bei Schritt e) der zweiten Klasse zugeordnet werden, und
der Anzahl von Werten aller bei Schritt c) festgelegten Merkmale, wie sie bei Schritt a) und Schritt b) gemessen wurden,

quantitativ zu bestimmen,
und

g) einen Warnhinweis zu erzeugen, der das Vorliegen eines einem möglichen Qualitätsmangel entsprechenden signifikanten Unterschiedes zwischen dem Prüfmuster und der Menge von Referenzmustern signalisiert, wenn die Größe wenigstens eines der bei Schritt f) berechneten Verhältnisse eine erste vorbestimmte Schwelle überschreitet.

2. Qualitätskontrollverfahren nach Anspruch 1, wobei der Schritt, der darin besteht, Verhältnisse quantitativ zu bestimmen, darin besteht:

das Verhältnis zwischen:

i) den gemessenen Werten der Merkmale bezüglich der dem Prüfmuster eigenen Peaks,
ii) den gemessenen Werten der Merkmale bezüglich der den Referenzmustern eigenen Peaks,
iii) den Werten aller Merkmale bezüglich der Peaks, die dem Prüfmuster und wenigstens einem der Referenzmuster gemein sind, wie sie bezüglich des Prüfmusters gemessen wurden,
iv) den Werten aller Merkmale bezüglich der Peaks, die dem Prüfmuster und wenigstens einem der Referenzmuster gemein sind, wie sie bezüglich der Referenzmuster gemessen wurden, und

den Werten aller bei Schritt c) festgelegten Merkmale, wie sie bei Schritt a) und Schritt b) gemessen wurden, quantitativ zu bestimmen, und
das Qualitätskontrollverfahren den Schritt umfaßt, der darin besteht:

h) für jedes der bei Schritt f) berechneten Verhältnisse Bilddaten zu generieren, die einen Bereich definieren, dessen Fläche von der Größe des Verhältnisses abhängt, und ein Bild entsprechend den Bilddaten anzuzeigen, wobei die Art der Darstellung jedes Bereichs unterschiedlich ist.

3. Qualitätskontrollverfahren nach Anspruch 1 oder 2, umfassend die Schritte, die darin bestehen:

j) unter den bei Schritt c) festgelegten Merkmalen den Teil, der von allen Merkmalen bezüglich der Peaks, die dem Prüfmuster und wenigstens einem der Referenzmuster gemein sind, gebildet ist, den Teil, der von Merkmalen bezüglich der Peaks, die den Referenzmustern eigen sind, gebildet ist, sowie den Teil, der von Merkmalen bezüglich der Peaks, die dem Prüfmuster eigen sind, gebildet ist, quantitativ zu bestimmen,
k) für jeden der bei Schritt j) quantitativ bestimmten Teile Bilddaten zu generieren, die einen Bereich definieren, dessen Fläche von der Größe des genannten Teils abhängt, und
l) ein Bild entsprechend den bei Schritt k) generierten Bilddaten anzuzeigen, wobei die Art der Darstellung jedes Bereichs unterschiedlich ist.

4. Qualitätskontrollverfahren nach Anspruch 1, 2 oder 3, umfassend die Schritte, die darin bestehen:

j) unter den bei Schritt c) festgelegten Merkmalen den Teil, der von allen Merkmalen bezüglich der Peaks, die dem Prüfmuster und wenigstens einem der Referenzmuster gemein sind, gebildet ist, den Teil, der von Merkmalen bezüglich der Peaks, die den Referenzmustern eigen sind, gebildet ist, sowie den Teil, der von Merkmalen bezüglich der Peaks, die dem Prüfmuster eigen sind, gebildet ist, quantitativ zu bestimmen,
m) einen Warnhinweis zu erzeugen, der das Vorliegen eines einem möglichen Qualitätsmangel entsprechenden signifikanten Unterschiedes zwischen dem Prüfmuster und der Menge von Referenzmustern signalisiert, wenn die Größe wenigstens eines der bei Schritt j) berechneten Teile eine jeweilige zweite vorbestimmte Schwelle überschreitet.

**5.** Qualitätskontrollverfahren nach einem der Ansprüche 1 bis 4, umfassend die Schritte, die darin bestehen:

j) unter den bei Schritt c) festgelegten Merkmalen den Teil, der von allen Merkmalen bezüglich der Peaks, die dem Prüfmuster und wenigstens einem der Referenzmuster gemein sind, gebildet ist, den Teil, der von Merkmalen bezüglich der Peaks, die den Referenzmustern eigen sind, gebildet ist, sowie den Teil, der von Merkmalen bezüglich der Peaks, die dem Prüfmuster eigen sind, gebildet ist, quantitativ zu bestimmen,
n) eine Reihenfolge zu definieren, um die bei Schritt c) festgelegten Merkmale zu ordnen,
o) die Verteilung - innerhalb der bei Schritt n) definierten Reihenfolge - der Merkmale bezüglich der Peaks, die dem Prüfmuster und wenigstens einem der Referenzmuster gemein sind, der Merkmale bezüglich der Peaks, die den Referenzmustern eigen sind, sowie der Merkmale bezüglich der Peaks, die dem Prüfmuster eigen sind, zu bestimmen, und
p) die bei Schritt o) bestimmte Verteilung zu analysieren, um zu prüfen, ob eine Bedingung für das Erzeugen eines Warnhinweises erfüllt ist oder nicht.

**6.** Qualitätskontrollverfahren nach einem der Ansprüche 1 bis 5, umfassend die Schritte, die darin bestehen:

j) unter den bei Schritt c) festgelegten Merkmalen den Teil, der von allen Merkmalen bezüglich der Peaks, die dem Prüfmuster und wenigstens einem der Referenzmuster gemein sind, gebildet ist, den Teil, der von Merkmalen bezüglich der Peaks, die den Referenzmustern eigen sind, gebildet ist, sowie den Teil, der von Merkmalen bezüglich der Peaks, die dem Prüfmuster eigen sind, gebildet ist, quantitativ zu bestimmen,
n) eine Reihenfolge zu definieren, um die bei Schritt c) festgelegten Merkmale zu ordnen,
q) erste Bilddaten zu den Merkmalen bezüglich der Peaks, die dem Prüfmuster und wenigstens einem der Referenzmuster gemein sind, zweite Bilddaten zu den Merkmalen bezüglich der Peaks, die den Referenzmustern eigen sind, sowie dritte Bilddaten zu den Merkmalen bezüglich der Peaks, die dem Prüfmuster eigen sind, zu generieren, und
r) ein Bild entsprechend den ersten, den zweiten und den dritten Bilddaten anzuzeigen, um auf der Bildebene Bilddaten bezüglich eines jeden Merkmals entsprechend der Lokalisierung dieses Merkmals innerhalb der bei Schritt n) definierten Reihenfolge zu lokalisieren, wobei die Art der Darstellung eines jeden Merkmals, je nachdem, ob dieses Merkmal den ersten oder zweiten oder den dritten Bilddaten entspricht, eine andere ist.

**7.** Qualitätskontrollverfahren nach Anspruch 6, und umfassend die Schritte, die darin bestehen:

s) für wenigstens eines der Merkmale bezüglich der Peaks, die dem Prüfmuster und einem Referenzmuster gemein sind, Bilddaten zu generieren, die einen Boxplot auf der Grundlage der Werte dieses Merkmals, wie sie bezüglich der Referenzmuster gemessen wurden, definieren, und
t) einen Boxplot gemäß den bei Schritt s) generierten Bilddaten anzuzeigen und hierüber Bilddaten bezüglich des Wertes des wenigstens einen Merkmals, wie er bezüglich des Prüfmusters gemessen wurde, einzublenden.

**8.** Qualitätskontrollverfahren nach Anspruch 7, und umfassend den Schritt, der darin besteht:

u) am Eingang von einem Benutzer stammende Auswahldaten zu erhalten,

wobei das Merkmal bzw. die Merkmale, für die Bilddaten bei Schritt s) generiert und bei Schritt t) angezeigt werden, aus Merkmalen bestehen, die durch bei Schritt u) erhaltene Auswahldaten identifiziert werden.

**9.** Qualitätskontrollverfahren nach Anspruch 7, wobei Bilddaten zu allen Merkmalen bezüglich der Peaks, die dem Prüfmuster und wenigstens einem Referenzmuster gemein sind, bei Schritt s) generiert und bei Schritt t) gemeinsam angezeigt werden.

**10.** Qualitätskontrollverfahren nach Anspruch 7 oder 9, wobei Bilddaten zu allen Merkmalen bezüglich der Peaks, die den Referenzmustern gemein sind, bei Schritt s) generiert und bei Schritt t) gemeinsam angezeigt werden, wobei die Bilddaten, die bezüglich des Prüfmusters angezeigt und über den Bilddaten zu den Merkmalen bezüglich der den Referenzmustern eigenen Peaks eingeblendet sind, Daten sind, die einen Wert Null anzeigen.

**11.** Qualitätskontrollverfahren nach Anspruch 7, 8, 9 oder 10, und umfassend den Schritt, der darin besteht, einen Warnhinweis zu erzeugen, wenn der Wert eines Koeffizienten $C$ eine dritte Schwelle überschreitet, worin:

$$C = (X(\text{unbekannt}) - \text{Mittelwert}(\text{Lernen})) / (\text{Standardabweichung}(\text{Lernen})),$$

worin X(unbekannt) der Wert eines Merkmals, wie bezüglich des Prüfmusters gemessen, ist, Mittelwert(Lernen) der Mittelwert der Werte des genannten Merkmals, wie sie bezüglich der Referenzmuster gemessen wurden, ist und die Standardabweichung(Lernen) die Standardabweichung ist, die auf die Werte des genannten Merkmals, wie sie bezüglich der Referenzmuster gemessen wurden, anwendbar ist.

12. Qualitätskontrollverfahren nach einem der Ansprüche 1 bis 11, und umfassend die Schritte, die darin bestehen:

v) am Eingang von einem Benutzer stammende Identifikationsdaten zu erhalten, wobei diese Identifikationsdaten entweder anzeigen, daß das Prüfmuster, bezüglich dessen ein Warnhinweis erzeugt worden ist, fehlerhaft ist, oder daß das Prüfmuster eine im Vergleich zu den Referenzmustern zulässige Variante darstellt, und
w) wenn die bei Schritt v) erhaltenen Identifikationsdaten anzeigen, daß das Prüfmuster eine zulässige Variante darstellt, ein Datenverarbeitungsmodell zu aktualisieren, um das Prüfmuster unter den Referenzmustern aufzunehmen.

13. Computerprogramm, das eine Gruppe von Befehlen besitzt, die dann, wenn sie auf einem Computer eingesetzt werden, dazu führen, daß der Computer die Schritte des in einem der Ansprüche 1 bis 12 definierten Qualitätskontrollverfahrens ausführt.

14. Qualitätskontrollverfahren, das geeignet ist, mittels einer Vergleichsanalyse eines von einem Produkt stammenden Prüfmusters gegenüber einer Menge von ebenfalls von Produkten stammenden Referenzmustern zu bestimmen, ob die Qualität des Produktes ein vorbestimmtes Niveau erreicht oder nicht, wobei die Qualität der Produkte, die den Referenzmustern entsprechen, das vorbestimmte Niveau haben, wobei das System einen Computer umfaßt, der derart programmiert ist, daß er die Schritte des in einem der Ansprüche 1 bis 12 definierten Qualitätskontrollverfahrens ausführt.

## FIG.1

## FIG.2

# FIG.3

base de données
d'apprentissage  2

module
de traitement  1

module de
génération
de données
d'image  3

module
d'affichage  4

5

module
d'entrée
utilisateur

données
décrivant
l'échantillon
sous test

# FIG.4

M(I,P) : 46957
R(I,P) 12.66 %

M(A,I): 88994
R(A,I) 24.00 %

M(A,P) : 55412
R(A,P) 14.95 %

M(I,I) : 179402
R(I,I) 48.39 %

## FIG.5

Propre à La librairie : 16
Soit   23.53 %

Propre à l'Echantillon : 3
Soit   4.41 %

Temps en Commun : 49
Soit   72.06 %

## FIG.6A

4

## FIG.6B

4

## FIG.7

valeur prise par l'échantillon inconnu

X

valeur maximale

valeur correspondante à 75%

moyenne — médiane

valeur correspondante à 25%

valeur minimale

Variable *n*

# FIG.8

LTime:B 41.66, ETime:40.88, Rapport 1.88

valeur prise par l'échantillon inconnu

# FIG.9

LTime:B 19.78, ETime:0.00, Rapport 3.96

valeur prise par l'échantillon inconnu

**FIG.10**

temps de rétention

**FIG.11**

temps de rétention

**RÉFÉRENCES CITÉES DANS LA DESCRIPTION**

**Littérature non-brevet citée dans la description**

- **Valentin Monev.** Introduction to Similarity Searching in Chemistry. *Match - Comm. in Mathematical and Computer Chemistry,* 2004, vol. 51, 7-38